# EUROPEAN PATENT SPECIFICATION

(11) **EP 4 059 123 B1**
(45) Date of publication and mention of the grant of the patent: **01.01.2025**
(21) Application number: 20817488.8
(22) Date of filing: 10.11.2020
(51) Int. Cl.: H02K 1/02, H02K 16/04, H02K 44/28, H02K 7/102, H02K 7/14, F16D 37/00, F16F 9/12, F16F 9/53, F16D 37/02, H01F 1/44

(54) **ELECTROMAGNETIC ACTUATOR WITH VARIABLE COMPLIANCE**
ELEKTROMAGNETISCHER AKTOR MIT VARIABLER NACHGIEBIGKEIT
ACTIONNEUR ÉLECTROMAGNÉTIQUE AVEC FLEXIBILITÉ VARIABLE

(30) Priority: 12.11.2019 IT 201900020910
(43) Date of publication of application: 21.09.2022
(73) Proprietor: Università di Pisa, 56124 Pisa (IT)
(72) Inventor: RIZZO, Rocco, 56122 Pisa (IT); MUSOLINO, Antonino, 56100 Pisa (IT); BARMADA, Sami, 56035 Casciana Terme Lari (Pisa) (IT); CONSOLO, Valentina, 54100 Massa (IT); CRISOSTOMI, Emanuele, 56121 Pisa (IT); FONTANA, Nunzia, 56124 Pisa (IT); SANI, Luca, 50053 Empoli (Firenze) (IT); TUCCI, Mauro, 56124 Pisa (IT); SIMONELLI, CLAUDIA, 56011 Calci (Pisa) (IT)
(74) Representative: Lunati & Mazzoni S.r.L.
(86) International application number: PCT/IB2020/060554
(87) International publication number: WO 2021/094907

(56) References cited:
- WO-A1-2010/102575
- WO-A2-2011/012111
- CN-A- 108 897 422
- DE-A1- 102007 055 306
- DE-C1- 4 441 208

## Description

The present invention relates to an electromagnetic actuator with variable compliance of the type specified in the preamble of the first claim.

It can be used in a robot (industrial, prosthetic or other), or any other device to move two components together by varying the mutual compliance. For example, the variable compliance actuator is suitable for use in applications in which a person may be present inside or near the operating area of the robot/device (hereinafter identified with the term robot for simplicity). In addition, it can be used in other applications such as servo-actuators, preferably with controlled force feedback.

As is known, one of the most important elements of a robot is the actuator, which, based on the ease of relative movement between the internal components, determined the compliance of the robot itself. In other words, the compliance of an actuator affects the force that the robot exchanges with the external environment during planned and/or accidental interactions.

For example, in order to ensure the correct positioning of the piece, the robot must have a rigid structure, or rather with low compliance, so as to ensure high stability and low vibrations.

Furthermore, it is increasingly common for an operator to work near a robot and it is therefore necessary to ensure a high degree of safety. In fact, during the motion, the robot can accidentally hit the operator and therefore it is necessary that the structure of the robot is characterized by a high compliance, or rather that its elasticity is maximum so that the robot can absorb all the energy of impact avoiding injury to the operator and damage to components inside the robotic system.

Currently, two types of actuators can be basically distinguished: the rigid ones and those with variable compliance.

In the early the compliance is not variable during processing. Examples of such first actuators are described in US2009230787 and US4739241. Variable compliance actuators in processing are described in US2012096973 and ITPI20110057. In these solutions, actuators are presented which use elastic means and/or cables whose tensioning is modified in real-time according to the desired compliance.

DE102007055306 discloses a brush commutated direct current motor, for active rolling stabilizer of motor vehicle, has brake unit coupled with stator in torsionally fixed manner, and rheological fluid provided in area between shaft's wall and unit, wherein the motor has a rotor arranged rotatably opposite to a stator together with a motor shaft. The shaft is formed as a hollow shaft to form an engine brake unit, and a brake unit is extended into the hollow shaft. The unit is connected with the stator in a torsionally fixed manner, and a magnetorheological fluid is provided in an area between an inner wall of the shaft and the unit. A wire wound coil is embedded into a plastic film, and the unit and the shaft are arranged concentrically to each other. $

CN108897422 discloses a minitype three-freedom spherical magnetorheological fluid actuator through multi-direction control. The actuator comprises an operative rod, a spherical rotor, a sealing unit, a stator unit and excitation units; the several excitation units are uniformly distributed in the sealing unit and located around the spherical rotor; each excitation unit can be singly controlled and corresponds to one stator set; the excitation units comprise winding shafts and coils, the winding shafts are wound with the coils, and the winding shafts are fixed and supported by stator sets; the spherical rotor, and the stator sets and the winding shafts jointly form a magnet yoke; one or more excitation units are activated to generate a magnetic field, the magnetic field changes the yieldstrength of magnetorheological fluid, so that when the operative rod is moved, passive force/force torque feedback are achieved in a corresponding direction and corresponding freedom degree. $

WO2011012111 discloses a magnetorheological actuator for the transmission and generation of torques, wherein the magnetorheological actuator comprises a driving shaft and a driven shaft onto which field-induced forces of a magnetorheological medium act in at least one gap between the driving shaft and the driven shaft. $

WO2010102575 discloses a magnetorheological actuator which comprises a motor/generator element and a clutch/brake element. The motor/generator element comprises a stator made of a high magnetic permeable material, an outer coil wound around the stator, a rotor made of a high magnetic permeable material and with a plurality of permanent magnets fixed thereon, and a cavity configured to accommodate a magnetorheological fluid. The clutch/ brake element is provided in the cavity. An inner coil is wound around the clutch/brake element. The magnetorheological fluid is capable of producing a shear stress in response to an electromagnetic field induced by the inner coil.

The known technique described comprises some important drawbacks.

In fact, known actuators with fixed compliance are unsuitable for responding to changing work requirements.

A drawback of those with variable compliance is the construction and/or mechanical complexity which makes the realization expensive and the frequency of failures relevant. In this situation, the technical task underlying the present invention is to devise a variable compliance electromagnetic actuator capable of substantially obviating at least part of the aforementioned drawbacks.

Within the scope of said technical task, an important object of the invention is to obtain an electromagnetic actuator with variable compliance which is simple and easy to construct and therefore resulting economical and reliable.

The technical task and the specified aims are achieved by an electromagnetic actuator with variable compliance as claimed in the attached claim 1.

Preferred technical solutions are highlighted in the dependent claims.

The features and advantages of the invention are clarified below by the detailed description of preferred embodiments of the invention, with reference to the accompanying drawings, wherein:
the Fig. 1 shows a sectional perspective view of an electromagnetic actuator with variable compliance, of the triaxial type spherical shape, according to the invention;
the Fig. 2 illustrates a transversal view of the actuator of Fig. 1;
the Fig. 3 is a transversal view of an electromagnetic actuator with variable compliance, of uniaxial type and cylindrical shape, according to the invention in a first embodiment; and
the Fig. 4 represents a transversal view of an electromagnetic actuator with variable compliance, of uniaxial mouse and cylindrical shape, according to the invention in a second embodiment.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the drawings, electromagnetic actuator with variable compliance according to the invention is globally indicated with the number 1.

It is, like any motor, capable of handling external objects. For example, the actuator 1 can create a joint, for example spherical, applicable inside robots (for example robotic prostheses) in such a way as to define a controllable coordination. In addition, or alternative, the actuator 1 can be used in non-robotic applications such as servo-actuators preferably with controlled force feedback.

In this regard, the actuator 1 comprises a motor shaft 2 defining the motion output from the actuator 1 and in particular an output axis 2a of the motion. Substantially, therefore, the motor shaft 2 connects to external objects along the output axis 2a in such a way that the external object, for example a phalanx of a robotic hand (alternatively an elbow, a knee or other joint), is integral with the motor shaft 2 with respect to the output axis 2a.

In detail, the motor shaft 2 defines the output of a rotary motion of the axis of the output axis 2a.

The motor shaft 2 is, for example, an elongated element extending along the output axis 2a.

The actuator 1 also comprises a rotor 3.

The rotor 3 is preferably constrained, suitably solidly, to the motor shaft 2. In particular, the rotor 3 directly moves the motor shaft 2. Therefore, the motor shaft 2 can be separated and constrained, whether in a resolvable way or not, to the rotor 3, or it can be in one piece with it.

The rotor 3 can be moved in response to the application of a first magnetic field. Therefore, it preferably comprises, at least partially, a ferromagnetic layer 300. Said ferromagnetic layer is made of ferromagnetic material suitably having magnetic permeability at least equal to 500 and in detail to 1000 (such as the iron). The rotor 3 is naturally adapted to cooperate with at least one stator.

In detail, the actuator 1 preferably comprises a first stator 4 and a second stator 5. The stators 4 an-d 5 can be distinct and separate, or they can be portions of the same stator.

Preferably, moreover, the first stator 4 and the second stator 5 make a chamber 45 inside which the rotor 3 is at least partially housed.

In particular, the first stator 4 can define a housing compartment for the second stator 5 and the rotor 3 and the chamber 45 can be a portion of said housing compartment. The first stator 4 can define a closed or preferably partially closed casing with a suitably open sector and closed in detail by the rotor 3. The first stator 4 can define the external profile of the actuator 1.

Alternatively, the second stator 5 can define a housing compartment for the first stator 4 and the rotor 3 and the chamber 45 can be a portion of said housing compartment. In this case, the second stator 5 can define a closed or preferably partially closed casing with a suitably open sector and closed in detail by the rotor 3. The second stator 5 can define the external profile of the actuator 1.

Preferably, the first stator 4 comprises a first wall 40, while the second stator 5 comprises a second wall 50.

The first wall 40 and the second wall 50 delimit, at least partially, at least one chamber 45 and preferably a single chamber 45. The chamber 45 is preferably a closed or partially closed casing, for example with an open sector and closed with the rotor 3, preferably including at least part of the rotor 3.

The rotor 3 comprises a partition wall 30.

The partition wall 30 is preferably dividing the chamber 45 into a first portion 45a and a second portion 45b.

The partition wall 30 comprises the ferromagnetic layer 300. It should be noted that the rest of the stator can be made of any other material.

The first portion 45a and the second portion 45b can be parts of the chamber 45, that is, actual sub-chambers, or they can also define, one or both, a slot of considerably reduced thickness.

The first portion 45a is defined between the first wall 40 and the partition wall 30, while the second portion 45b is defined between the second wall 50 and the partition wall 30.

Preferably, the partition wall 30 is arranged almost in contact with the first wall 40. Therefore, preferably, in a preferred embodiment, the first portion 45a is substantially a slot arranged between part of the rotor 3 and the first stator 4 defining a thickness minimum mainly suitable for allowing the clearance between rotor 3 and the first stator 4.

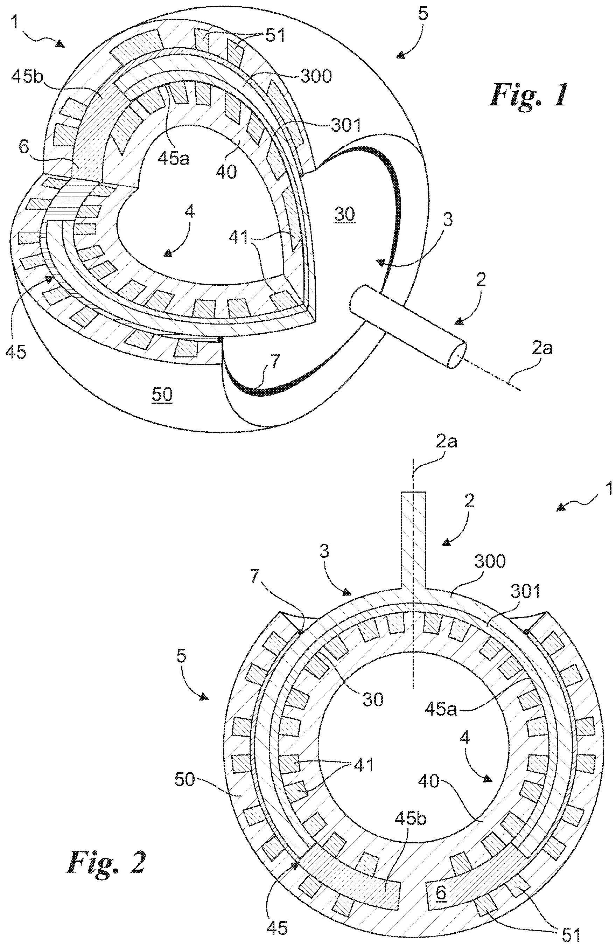

Preferably the second portion 45b occupies most of the chamber 45 and is a real sub-chamber of dimensions almost similar to the chamber 45, as shown for example on the Figs. 1-2.

The walls 30, 40, 50 can also define a plurality of shapes and sizes. In particular, the shape of the walls can determine the operation of the actuator 1 which can be, for example, uniaxial, biaxial or even triaxial.

In a preferred embodiment, shown in the Figs. 1-2, the walls 30, 40, 50 define spherical bodies coaxial and mutually concentric with respect to a reference center (better described below).

Furthermore, preferably, one of the first stator 4 and the second stator 5 contains at least part of the rotor 3. In turn, preferably, the rotor 3 contains at least part of the other between the second stator 5 and the first stator 4.

In particular, in the Figs. 1-2, a configuration is shown in which the second stator 5 encloses the rotor 3 and the rotor 3 partially encloses the first stator 4. Alternatively, the walls 30, 40, 50 could define cylindrical bodies coaxial and centered with respect to the main rotation axis 2a. Also in this case, one between the first stator 4 and the second stator 5 can contain at least part of the rotor 3 and the latter could contain, in turn, at least part of the other between the second stator 5 and the first stator 4.

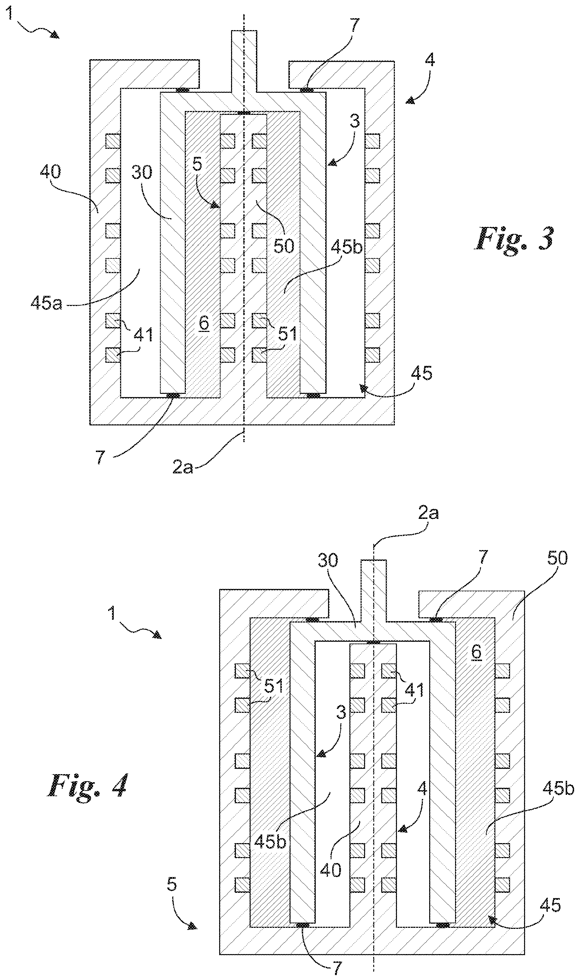

In the first embodiment of Fig. 3, the first stator 4 includes part of the rotor 3 and the rotor 3 includes the second stator 5. In contrast, in the alternative embodiment of Fig. 4, the second stator 5 includes part of the rotor 3 and the rotor 3 includes the first stator 4.

Preferably, in any case, the first stator 4 is configured to generate the first magnetic field, suitable for moving the rotor 3. Said first magnetic field can be proportional to a first electrical signal.

In particular, the first stator 4 can be connected to a first electric generator suitably with non-direct current preferably with a modulable and more preferably alternating wave form. Of course, the first stator 4 can also include the first electrical generator.

In any configuration, preferably, the first electric generator is suitable for determining the first electric signal, or to generate the first magnetic field. It is non-direct current preferably with a modulable and more preferably alternating wave form.

In order to convert the electric signal into a magnetic signal, preferably, the first stator 4 includes at least a first coil 41 housed within the first wall 40. The first coil 41 is, therefore, preferably connected to the first generator and suitable for forming the first magnetic field.

According to the invention (see Figs. 1-2), the first stator 4 includes a plurality of first coils 41.

These first coils 41 housed in distinct and separate positions of the wall 40 and can be independently controlled/powered in such a way that the first magnetic field can move (in detail to rotate) the rotor 3 and therefore the motor shaft 2 with respect to the stators 4 and 5 around a plurality of rotation axes also distinct from the output axis 2a.

In this way, in fact, the motor shaft 2 and therefore the output axis 2a rotate with respect to the stators 4 and 5 and therefore to an absolute reference system. In conclusion, it is thus possible to rotate the same output axis 2a around the axes of rotation.

According to the invention, the first coils 41 are concentric with respect to at least one reference axis (for example one in the case of a single-axis actuator) and capable of being only partially activated so as to control the rotation of the rotor 3 and therefore the motor shaft 2 with respect to at least one rotation axis suitably coincident with said reference axis.

According to the invention, the first coils 41 are concentric with respect to a reference center and suitable for being partially activated so as to control the rotation of the rotor 3 and therefore the motor shaft 2 with respect to at least one rotation axis substantially passing through said center of reference.

Furthermore, optionally, the first coils 41 can be activated along a spherical zone, or circumference, concentric (and suitably barycentric) with respect to said axis/center of reference so as to rotate the rotor 3 and therefore the motor shaft 2 with respect to the axis of rotation by arranging the output axis 2a perpendicular to the spherical zone, or circumference.

The second stator 5 is also preferably configured to generate a second magnetic field in proportion to a second electrical signal.

The second electrical signal, however, is preferably determined by a second electric generator suitably direct current conveniently of modulable amplitude. The second generator can also be external to the second stator 5 or included in it. Furthermore, the second stator 5 also comprises at least a second coil 51.

The second coil 51 is preferably housed in the second wall 50. Furthermore, it is preferably connected to said second generator and suitable for forming the second magnetic field.

Preferably (see Figs. 1-2) the second stator 5 comprises several second coils 51. These second coils 51 are housed in distinct and separate positions of the second wall 50 and can be independently controllable/feedable.

Even more in detail, the second coils 51 are preferably concentric with respect to at least one reference axis (for example one in the case of a uniaxial actuator) and capable of being only partially activated.

Alternatively, the second coils 51 are preferably concentric with respect to a reference center and suitable for being only partially.

Optionally, the second coils 51 can be activated along a spherical zone, or circumference, concentric (and suitably barycentric) with respect to said axis/center of reference.

Unlike the first stator 4, which is suitable for interacting with the rotor 3, the second stator 5 is preferably suitable for interacting with a magnetorheological fluid 6.

In fact, preferably, the actuator comprises at least one magnetorheological fluid 6 housed in at least part of the at least one chamber 45 and configured to oppose the motion of the rotor 3 appropriately proportionally (preferably in the opposite way) to its compliance.

In particular, preferably, the magnetorheological fluid 6 is housed in the second portion 45b.

Therefore, while the first stator 4 substantially defines the driving force of the actuator 1, the magnetorheological fluid 6 and, in particular its viscosity, define the compliance of the actuator 1.

The magnetorheological fluid 6, however, not only passively reacts to the movement of the rotor 3, but can preferably be activated on command.

In fact, the second stator 5 generates the second magnetic field in such a way as to vary, on command, the viscosity of the magnetorheological fluid 6.

The second magnetic field is proportional, preferably inversely, to the compliance of the actuator 1.

The first magnetic field is proportional, preferably directly, to the torque generated by the actuator 1.

Preferably, therefore, since the first stator 4 and the second stator 5 are adapted to interact with different parts of the actuator 1 and with different functions, the wall 30, preferably, magnetic isolates the first portion 45a and the second portion 45b. Naturally, with that it is not intended that the partition wall 30 is configured to completely isolate the first stator 4 and the second stator 5, but that the partition wall 30 isolates the first stator 4 and the second stator 5 at least where interposed between them. For example, in the case of several first coils 41 placed concentric with respect to said reference center and partially activated, the partition wall 30 magnetically isolates the first stator 4 from the second stator 5 at least in correspondence with said first activated coils 41.

For this purpose, the partition wall 30 comprises a conductive layer 301. In detail it comprises and preferably consists of the ferromagnetic layer 300 and the conductive layer 301.

The conducting layer 301 faces to the first stator 4. In particular, the conducting layer 301 is preferably suitable for allowing the first magnetic field to generate induced currents capable of allowing the motion of the rotor 3 to be controlled. The conductive layer 301 can be made of aluminum, cooper or other electrically similar material.

Preferably the conducting layer 301 faces the first wall 40 and the ferromagnetic layer 300 faces the second wall 50.

In order to avoid interference between the first and second magnetic fields, the ferromagnetic layer 300 is such as to allow the field lines of said magnetic fields to close on said ferromagnetic layer 300 without interfering with each other. It can therefore have a thickness substantially comprised between 0.1 cm and 2 cm and in detail between 0.5 ad 1 cm.

In some case, the actuator 1 may comprise sealing means 7 suitable for avoiding a passage of magnetorheological fluid 6 between the portions 45a and 45b.

The sealing means 7 are arranged at least between the partition wall 30 and the second wall 50 in such a way that the second portion 45b is watertight.

Sealing means 7 of this type may include, for example, elastomeric elements such as O-ring, gaskets and other similar elements.

Finally, it should be noted that the actuator 1 can provide an access pipe to the housing compartment for supply wires of at least one of the at least one first coil 41 and the at least one second coil 51.

The operation of the actuator 1 previously described in structural terms is as follows.

Depending on the application of the first magnetic field and the second magnetic field, on the basis of the main and secondary electrical signals, it is possible to determine both the driving force, in particular the torque, and the compliance of the rotor motor shaft 2.

The actuator 1 according to the invention achieves, therefore, important advantages.

In fact, the actuator 1 allows you to completely control the braking means which are, for the actuator, active means and controllable by the user.

Furthermore, the use of magnetorheological fluid 6 allows you to integrate both functions in a small actuator. This advantage has considerable prominence especially when the actuator is applied above robotic structures such as protheses.

In conclusion, all the functions are implemented without overly complicating the structure of the actuator 1 with obvious economic and reliability advantages.

Another fundamental advantage lies in the fact that, thanks to the particular arrangement and/or possibility of independent feeding of the first coils 41 and/or of the second coils 51, the actuator 1, for example in the case of spherical actuator 1, allows to select the compliance and/or the torque output on one or more axes. The invention is susceptible of variants falling within the scope of the inventive concept defined by the claims.

For example, as already mentioned, the actuator can be mono, bi or triaxial depending on the configurations adopted by the walls 30, 40, 50 while falling within the same inventive concept as defined by the appended claims.

## Claims

1. Electromagnetic actuator (1), comprising:
- a motor shaft (2) defining an output axis (2a) of the motion of said actuator (1),
- a rotor (3) connected integrally to said motor shaft (2) and movable in response to the application of a first magnetic field,
- a first stator (4) configured to generate said first magnetic field proportionally to a first electrical signal in such a way as to move said rotor (3) and including a first wall (40),
- a second stator (5) including a second wall (50) defining with said first wall (40) a chamber (45) including at least part of said rotor (3), and containing
- at least one magnetorheological fluid (6) housed in at least part of said chamber (45),
- said rotor (3) comprising a partition wall (30) configured to divide said chamber (45) into a first portion (45a) defined between said first wall (40) and said partition wall (30) and into a second portion (45b) defined between said partition wall (30) and said second wall (50),
- said partition wall (30) magnetically isolating said first portion (45a) and said second portion (45b),
- said magnetorheological fluid (6) being housed in said second portion (45b), and
- said second stator (5) also being configured to generate a second magnetic field in proportion to a second magnetic field in such a way as to vary, on command, the viscosity of said magnetorheological fluid (6) and therefore the compliance of said actuator (1);
**characterized by the fact that**
- said first wall (40) includes a plurality of said first coils (41); and said first coils (41) are concentric with respect to a reference center, housed in distinct and separate positions of said first wall (40) and independently controllable so that said the first magnetic field can move said rotor (3) around a plurality of rotation axes passing through said center of reference and distinct from said output axis (2a) so that said output axis (2a) also rotates.

2. Actuator (1) according to claim 1, wherein said first electrical signal is determined by a first non-direct current electrical generator and said second electrical signal is determined by a second modulable direct current electrical generator.

3. Actuator (1) according to at least one preceding claim, wherein said first stator (4) includes at least a first coil (41) housed in said first wall (40), connected to said first generator and adapted to realize said first magnetic field and said second stator (5) includes at least a second coil (51) housed in said second wall (50), connected to said second generator and adapted to realize said second magnetic field.

4. Actuator (1) according to at least one preceding claim, wherein at least part of said partition wall (30) includes ferromagnetic material and said partition wall includes a conductive layer (301) facing said first stator (4).

5. Actuator (1) according to at least one preceding claim, wherein said partition, first and second walls (30, 40, 50) define cylindrical bodies coaxial and centered with respect to said main rotation axis (2a), one between said first stator (4) and said second stator (5) contains at least part of said rotor (3) and said rotor (3) contains at least part of the other between said second stator (5) and said first stator (4).

6. Actuator (1) according to at least one preceding claim, in which said partition, first and second walls (30, 40, 50) define spherical bodies coaxial and mutually concentric with reference center, one between said first stator (4) and said second stator (5) contains at least part of said rotor (3) and said rotor (3) contains at least part of the other between said second stator (5) and said first stator (4).

7. Actuator (1) according to claim 6, in which said first coils (41) are concentric with said center of reference and able to only partially activated so as to control the rotation of said rotor (3) with respect to at least one said axis of rotation.

8. Actuator (1) according to at least claim 7, wherein said first coils (41) can be activated along a spherical zone concentric with respect to said reference center so as to rotate said rotor (3) with respect to said at least one rotation axis by arranging said output axis (2a) perpendicular to said spherical zone.

9. Actuator (1) according to at least one preceding claim, comprising sealing means (7) arranged between said partition wall (30) and said second wall (50) in such a way that said second portion (45b) is watertight.

## Patentansprüche

1. Elektromagnetischer Aktuator (1), umfassend:
- eine Motorwelle (2), die eine Ausgangsachse (2a) der Bewegung des Aktuators (1) definiert,
- einen Rotor (3), der integral mit der Motorwelle (2) verbunden ist und in Reaktion auf die Anwendung eines ersten Magnetfelds beweglich ist,
- einen ersten Stator (4), der konfiguriert ist, das erste Magnetfeld proportional zu einem ersten elektrischen Signal zu erzeugen, um den Rotor (3) zu bewegen, und umfassend eine erste Wand (40),
- einen zweiten Stator (5), der eine zweite Wand (50) umfasst, die mit der ersten Wand (40) eine Kammer (45) definiert, die mindestens einen Teil des Rotors (3) enthält, und enthaltend
- mindestens eine magnetorheologische Flüssigkeit (6), die in mindestens einem Teil der Kammer (45) augenommen wird,
- der Rotor (3) umfassend eine Trennwand (30), die konfiguriert ist, die Kammer (45) in einen ersten Abschnitt (45a), der zwischen der ersten Wand (40) und der Trennwand (30) definiert ist, und in einen zweiten Abschnitt (45b), der zwischen der Trennwand (30) und der zweiten Wand (50) definiert ist, zu teilen,
- wobei die Trennwand (30) magnetisch den ersten Abschnitt (45a) und den zweiten Abschnitt (45b) isoliert,
- die magnetorheologische Flüssigkeit (6) im zweiten Abschnitt (45b) aufgenommen wird, und wobei
- der zweite Stator (5) auch konfiguriert ist, ein zweites Magnetfeld proportional zu einem zweiten Magnetfeld zu erzeugen, um auf Befehl die Viskosität der magnetorheologischen Flüssigkeit (6) und daher die Gebrauchstauglichkeit des Aktuators (1) zu ändern;
**gekennzeichnet dadurch, dass**
- die erste Wand (40) eine Vielzahl von ersten Spulen (41) umfasst; und die ersten Spulen (41) konzentrisch in Bezug auf ein Bezugszentrum sind, in getrennten und separaten Positionen der ersten Wand (40) aufgenommen werden und unabhängig steuerbar sind, so dass das erste Magnetfeld den Rotor (3) um eine Vielzahl von Rotationsachsen bewegen kann, die durch das Bezugszentrum hindurchgehen und sich von der Ausgangsachse (2a) unterscheiden, so dass die Ausgangsachse (2a) ebenfalls dreht.

2. Aktuator (1) gemäß Anspruch 1, wobei das erste elektrische Signal durch einen ersten elektrischen Nicht-Gleichstrom-Generator bestimmt wird und das zweite elektrische Signal durch einen zweiten modulierbaren Gleichstrom-Generator bestimmt wird.

3. Aktuator (1) nach mindestens einem der vorhergehenden Ansprüche, wobei der erste Stator (4) mindestens eine erste Spule (41) umfasst, die in der ersten Wand (40) aufgenommen ist, mit dem ersten Generator verbunden ist und geeignet ist, das erste Magnetfeld zu erzeugen, und wobei der zweite Stator (5) mindestens eine zweite Spule (51) umfasst, die in der zweiten Wand (50) aufgenommen ist, mit dem zweiten Generator verbunden ist und geeignet ist, das zweite Magnetfeld zu erzeugen.

4. Aktuator (1) nach mindestens einem der vorhergehenden Ansprüche, wobei mindestens ein Teil der Trennwand (30) ferromagnetisches Material umfasst und die Trennwand eine leitfähige Schicht (301) umfasst, die dem ersten Stator (4) zugewandt ist.

5. Aktuator (1) nach mindestens einem der vorhergehenden Ansprüche, wobei die Trennwand, die erste Wand und die zweite Wand (30, 40, 50) Zylinderkörper definieren, die koaxial und zentriert in Bezug auf die Hauptrotationsachse (2a) liegen, wobei eines zwischen dem ersten Stator (4) und dem zweiten Stator (5) mindestens einen Teil des Rotors (3) enthält und der Rotor (3) mindestens einen Teil des anderen zwischen dem zweiten Stator (5) und dem ersten Stator (4) enthält.

6. Aktuator (1) nach mindestens einem der vorhergehenden Ansprüche, wobei die Trennwand, die erste und die zweite Wand (30, 40, 50) Kugelkörper definieren, die koaxial und wechselseitig konzentrisch in Bezug auf das Bezugszentrum liegen, wobei eines zwischen dem ersten Stator (4) und dem zweiten Stator (5) mindestens einen Teil des Rotors (3) enthält und der Rotor (3) mindestens einen Teil des anderen zwischen dem zweiten Stator (5) und dem ersten Stator (4) enthält.

7. Aktuator (1) nach Anspruch 6, wobei die ersten Spulen (41) konzentrisch mit dem Bezugszentrum liegen und nur teilweise aktiviert werden können, um die Rotation des Rotors (3) in Bezug auf mindestens eine Rotationsachse zu steuern.

8. Aktuator (1) nach mindestens Anspruch 7, wobei die ersten Spulen (41) entlang eines Kugelbereichs konzentrisch in Bezug auf das Bezugszentrum aktiviert werden können, um den Rotor (3) in Bezug auf mindestens eine Rotationsachse zu drehen, indem die Ausgangsachse (2a) senkrecht zu dem Kugelbereich angeordnet wird.

9. Aktuator (1) nach mindestens einem der vorhergehenden Ansprüche, umfassend Dichtmittel (7), die zwischen der Trennwand (30) und der zweiten Wand (50) angeordnet sind, so dass der zweite Abschnitt (45b) wasserdicht ist.

## Revendications

1. Actionneur électromagnétique (1), comprenant:
- un arbre moteur (2) définissant un axe de sortie (2a) du mouvement dudit actionneur (1),
- un rotor (3) relié intégralement audit arbre moteur (2) et mobile en réponse à l'application d'un premier champ magnétique,
- un premier stator (4) configuré pour générer ledit premier champ magnétique proportionnellement à un premier signal électrique de manière à déplacer ledit rotor (3) et comprenant une première paroi (40),
- un deuxième stator (5) comprenant une deuxième paroi (50) définissant avec ladite première paroi (40) une chambre (45) comprenant au moins une partie dudit rotor (3), et contenant
- au moins un fluide magnétorhéologique (6) logé dans au moins une partie de ladite chambre (45),
- ledit rotor (3) comprenant une paroi de séparation (30) configurée pour diviser ladite chambre (45) en une première partie (45a) définie entre ladite première paroi (40) et ladite paroi de séparation (30) et en une deuxième partie (45b) définie entre ladite paroi de séparation (30) et ladite deuxième paroi (50),
- ladite paroi de séparation (30) isolant magnétiquement ladite première partie (45a) et ladite deuxième partie (45b),
- ledit fluide magnétorhéologique (6) étant logé dans ladite deuxième partie (45b), et
- ledit deuxième stator (5) étant également configuré pour générer un deuxième champ magnétique proportionnellement à un deuxième champ magnétique de manière à faire varier, sur commande, la viscosité dudit fluide magnétorhéologique (6) et donc la conformité dudit actionneur (1) ;
**caractérisé par le fait que**
- ladite première paroi (40) comprend une pluralité desdites premières bobines (41); et lesdites premières bobines (41) sont concentriques par rapport à un centre de référence, logées dans des positions distinctes et séparées de ladite première paroi (40) et contrôlables indépendamment de sorte que ledit premier champ magnétique puisse déplacer ledit rotor (3) autour d'une pluralité d'axes de rotation passant par ledit centre de référence et distincts dudit axe de sortie (2a) de sorte que ledit axe de sortie (2a) tourne également.

2. Actionneur (1) selon la revendication 1, dans lequel ledit premier signal électrique est déterminé par un premier générateur électrique à courant non continu et ledit deuxième signal électrique est déterminé par un deuxième générateur électrique modulable à courant continu.

3. Actionneur (1) selon au moins une revendication précédente, dans lequel ledit premier stator (4) comprend au moins une première bobine (41) logée dans ladite première paroi (40), reliée audit premier générateur et adaptée pour réaliser ledit premier champ magnétique et ledit deuxième stator (5) comprend au moins une deuxième bobine (51) logée dans ladite deuxième paroi (50), reliée audit deuxième générateur et adaptée pour réaliser ledit deuxième champ magnétique.

4. Actionneur (1) selon au moins une revendication précédente, dans lequel au moins une partie de ladite paroi de séparation (30) comprend un matériau ferromagnétique et ladite paroi de séparation comprend une couche conductrice (301) faisant face audit premier stator (4).

5. Actionneur (1) selon au moins une revendication précédente, dans lequel ladite paroi de séparation, les première et deuxième parois (30, 40, 50) définissent des corps cylindriques coaxiaux et centrés par rapport audit axe de rotation principal (2a), l'une entre ledit premier stator (4) et ledit deuxième stator (5) contenant au moins une partie dudit rotor (3) et ledit rotor (3) contenant au moins une partie de l'autre entre ledit deuxième stator (5) et ledit premier stator (4).

6. Actionneur (1) selon au moins une revendication précédente, dans lequel ladite paroi de séparation, les première et deuxième parois (30, 40, 50) définissent des corps sphériques coaxiaux et mutuellement concentriques par rapport au centre de référence, l'une entre ledit premier stator (4) et ledit deuxième stator (5) contenant au moins une partie dudit rotor (3) et ledit rotor (3) contenant au moins une partie de l'autre entre ledit deuxième stator (5) et ledit premier stator (4).

7. Actionneur (1) selon la revendication 6, dans lequel lesdites premières bobines (41) sont concentriques audit centre de référence et peuvent être seulement partiellement activées de manière à contrôler la rotation dudit rotor (3) par rapport à au moins l'un desdits axes de rotation.

8. Actionneur (1) selon au moins la revendication 7, dans lequel lesdites premières bobines (41) peuvent être activées le long d'une zone sphérique concentrique par rapport audit centre de référence de manière à faire tourner ledit rotor (3) par rapport audit au moins un axe de rotation en disposant ledit axe de sortie (2a) perpendiculairement à ladite zone sphérique.

9. Actionneur (1) selon au moins une revendication précédente, comprenant des moyens d'étanchéité (7) disposés entre ladite paroi de séparation (30) et ladite deuxième paroi (50) de sorte que ladite deuxième partie (45b) soit étanche.
